# EUROPEAN PATENT SPECIFICATION

(11) **EP 4 638 224 B1**
(45) Date of publication and mention of the grant of the patent: **21.10.2026**
(21) Application number: 22843745.5
(22) Date of filing: 22.12.2022
(51) Int. Cl.: B60W 40/068, G06V 20/56

(54) **WHEEL SPEED MEASUREMENT**
RADGESCHWINDIGKEITSMESSUNG
MESURE DE VITESSE DE ROUE

(43) Date of publication of application: 29.10.2025
(73) Proprietor: VOLVO TRUCK CORPORATION, 405 08 Göteborg (SE)
(72) Inventor: MIDGLEY, William, Sydney, New South Wales 2060 (AU); OTOOFI, Mohammad, Loughborough, Leicestershire LE11 3TU (GB); JUSTHAM, Laura, Loughborough, Leicestershire LE11 3JP (GB); HENDERSON, Leon, 438 92 Härryda (SE); LAINE, Leo, 438 94 Härryda (SE)
(74) Representative: Ström & Gulliksson AB
(86) International application number: PCT/EP2022/087450
(87) International publication number: WO 2024/132145

(56) References cited:
- US-A1- 2015 251 659
- US-A1- 2020 262 439
- US-A1- 2022 063 630

## Description

### TECHNICAL FIELD

The disclosure relates generally to vehicle control. In particular aspects, the disclosure relates to wheel speed measurement. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In vehicle motion management, a control system of a vehicle may determine control signals for actuators of the vehicle in order to satisfy the requested global forces of the vehicle combination. For example, the control system may receive an input related to a manoeuvre for the vehicle combination and state information of the vehicle comprising motion parameters and determine control signals in the form of propulsion and braking instructions that meet the requested global forces of the vehicle subject to certain constraints, for example energy and safety constraints.

The state information of the vehicle may include information from sensors distributed across the vehicle. For example, velocity, wheel speed, specific force, angular rate, and orientation may each be determined by various sensors disposed on the vehicle. In vehicle combinations, where a tractor unit may provide propulsion for the entire combination while trailer units are towed behind, sensors may be disposed on each unit in order to determine unit-specific parameters and relative parameters between units such as an articulation angle.

In order to provide control signals that result in safe and efficient operation of the vehicle, it should be ensured that the information on which the control signals are based is accurate. Presently, many vehicle sensors may not operate in a sufficiently accurate manner dependent on environmental factors such as road conditions that can affect their operation. For example, when operating on low-traction surfaces for example sand, gravel and ice, the wheels of a vehicle can spin much more quickly than would be expected for the given vehicle speed. This is known as slip, and high-slip scenarios can lead to inaccurate results from a vehicle's motion management system, particularly its estimates for vehicle speed.

It is therefore desired to develop a solution for vehicle motion management that addresses or at least mitigates some of these issues.

US 2020/262439 A1 discloses mu confidence estimation and blending, including a method of providing a reliable driving surface friction coefficient estimate.

### SUMMARY

This disclosure attempts to address the problems noted above by providing methods for determining a confidence value for a wheel speed measurement of a vehicle based on a travelling surface for the vehicle. In particular, a video feed from an on-board camera of the vehicle is analysed to determine the surface, based on which friction coefficient for the surface can be determined. This can be used to assess the reliability of a wheel speed measurement for use in the determination of further vehicle parameters. This provides valuable context to wheel speed measurements coming from a wheel speed sensor, and can be used to determine how much weight should be given to a wheel speed sensor measurement in vehicle motion management calculations.

According to a first aspect of the disclosure, there is provided a computer-implemented method for determining a confidence value for a wheel speed measurement of a vehicle, the method comprising receiving video data from at least one image sensor mounted on the vehicle, processing the video data to determine at least one travelling surface for the vehicle, and determining a confidence value for a wheel speed measurement of the vehicle based on the travelling surface.

The first aspect of the disclosure may seek to provide valuable context to wheel speed measurements coming from a wheel speed sensor. In particular, the confidence value is a measure of how well the wheel speed measurement is likely to correspond to the real speed of the vehicle over the ground, and, and can be used to determine how much weight should be given to the wheel speed sensor measurement in vehicle motion management calculations. A technical benefit may include that vehicle motion management calculations can be adjusted to ensure safe and efficient operation of the vehicle. For example, if the vehicle is travelling on a low-traction surface, the control system can be made aware of this and adjust propulsion or braking control signals accordingly. This removes the requirement for an expensive ground-scanning system and provides an alternative to noisy vehicle-speed estimates from existing camera systems.

Optionally, the at least one image sensor comprises at least one forward-facing camera and/or at least one rearward-facing camera.

Optionally, processing the video data is performed using a semantic segmentation algorithm.

Optionally, the confidence value describes the correspondence between the wheel speed measurement and the real speed of the vehicle over the ground.

Optionally, determining the confidence value comprises determining a friction coefficient associated with the travelling surface.

Optionally, processing the video data comprises determining a first travelling surface having a first friction coefficient and determining a second travelling surface having a second friction coefficient. Optionally, determining the confidence value comprises determining a first confidence value based on the first travelling surface and determining a second confidence value based on the second travelling surface.

Optionally, the method comprises determining a respective confidence value for at least one wheel of the vehicle or at least one subset of wheels of the vehicle.

Optionally, the method comprises determining a common confidence value for all wheels of the vehicle.

Optionally, the method comprises determining a motion parameter of the vehicle based on the wheel speed measurement and the confidence value.

Optionally, the vehicle is a vehicle combination comprising a tractor unit and at least one trailing unit, and the at least one image sensor is mounted on the tractor unit of the vehicle combination.

According to a second aspect of the disclosure, there is provided a computer program product comprising program code for performing the computer-implemented method when executed by processing circuitry.

According to a third aspect of the disclosure, there is provided a non-transitory computer-readable storage medium comprising instructions, which when executed by processing circuitry, cause the processing circuitry to perform the computer-implemented method.

According to a fourth aspect of the disclosure, there is provided a computer system comprising one or more control units comprising processing circuitry configured to perform the computer-implemented method.

According to a fifth aspect of the disclosure, there is provided a vehicle comprising the computer system of the fourth aspect.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above-discussed technical benefits.

### BRIEF DESCRIPTION OF THE DRAWINGS

With reference to the appended drawings, below follows a more detailed description of aspects of the disclosure cited as examples.
**FIG. 1** schematically shows a side view of an example vehicle combination.
**FIG. 2** schematically shows a top-view of an example vehicle combination.
**FIG. 3** is a flowchart of an example method for determining a confidence value for a wheel speed measurement of a vehicle.
**FIG. 4** shows an example frame from a video captured by a forward-facing camera of a vehicle.
**FIG. 5** shows an example frame from a video captured by a rearward-facing camera of a vehicle.
**FIG. 6** is a schematic diagram of an exemplary computer system for implementing examples disclosed herein, according to one example.
**FIG. 7** is a schematic drawing of a computer readable medium according to one example.
**FIG. 8** is a schematic block diagram of a control unit according to one example.

Like reference numerals refer to like elements throughout the description.

### DETAILED DESCRIPTION

Aspects set forth below represent the necessary information to enable those skilled in the art to practice the disclosure.

In certain conditions, sensors on a vehicle may not operate in a sufficiently accurate manner to provide information for control signals that ensure safe and efficient operation of the vehicle. For example, environmental factors such as road conditions can affect their operation. In one example, when operating on low-traction surfaces, the wheels of a vehicle can spin much more quickly or slowly than would be expected for the given vehicle speed. This is known as slip, and high-slip scenarios can lead to inaccurate results from a vehicle's motion management system, particularly its estimates for vehicle speed.

To remedy this, methods are proposed for determining a confidence value for a wheel speed measurement of a vehicle based on a travelling surface for the vehicle. This can be achieved by analysing a video feed from an on-board camera of the vehicle to determine the surface, based on which a friction coefficient for the surface can be determined. This can be used to assess the reliability of a wheel speed measurement for use in the determination of further vehicle parameters. This provides valuable context to wheel speed measurements coming from a wheel speed sensor. In particular, the confidence value is a measure of how well the wheel speed measurement is likely to correspond to the real speed of the vehicle over the ground, and can be used to determine how much weight should be given to a wheel speed sensor measurement in vehicle motion management calculations.

Whilst the following disclosure refers to vehicle combinations having a plurality of units, it will be appreciated that the methods disclosed herein can be used with any suitable form of terrestrial vehicle. For example, the disclosure can be applied in heavy-duty vehicles, such as trucks, buses, and construction equipment, in personal vehicles such as cars, vans, or motorbikes, or in any other suitable form of terrestrial vehicle. It should be noted that, in the context of the present disclosure, terrestrial vehicles are those that travel on land, and are not limited only to earth-based vehicles.

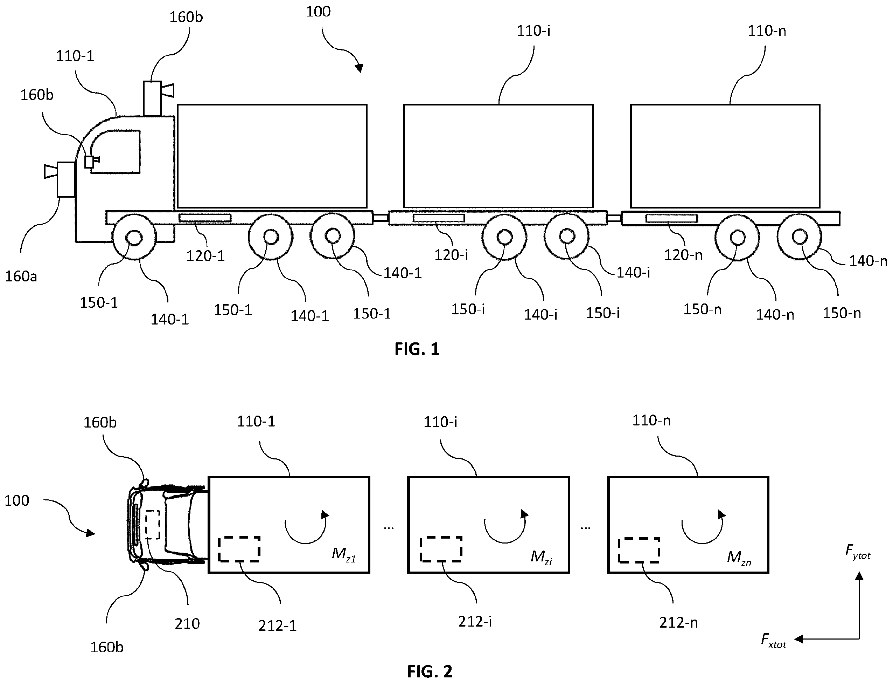

FIG. 1 schematically shows a side view of an example vehicle combination 100 of the type considered in this disclosure. The vehicle combination **100** comprises a number of units **110,** including a tractor unit and at least one trailing unit. Each unit **110** may be given an index *i,* and the total number of units in a vehicle combination is designated *n.* Whilst two trailing units **110-i, 110-n** are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination, and may comprise the cabin for the driver, including steering controls, dashboard displays and the like. Generally, the tractor unit **110-1** is used to provide propulsion power for the vehicle combination **100.** In the example of **FIG. 1****,** the tractor unit **110-1** may also be used to store goods that are being transported by the vehicle combination **100.**

A trailing unit, such as the trailing units **110-i, 110-n,** is generally used to store goods that are being transported by the vehicle combination **100.** A trailing unit may be a truck, trailer, dolly and the like. A trailing unit may also provide propulsion to the vehicle combination **100.** A trailing unit without a front axle, such as the trailing units **110-i, 110-n,** is known as a semi-trailer. In vehicle combinations such as that shown in **FIG. 1****,** vehicle motion management is available on a unit level to receive requests from a manual or virtual/autonomous driver to coordinate the propulsion, braking and steering. All units **110** may provide propulsion to the vehicle combination **100.**

Each unit **110** may comprise one or more batteries **120** configured to provide power to one or more electrical machines (not shown) such as electric motors. The electrical machines are configured to drive, e.g. provide torque and/or steering to, one or more axles or individual wheels **140** of the unit **110.** In some examples, electric motors may also be operated as generators, in order for the electric motors to generate braking force when required. Furthermore, each unit **110** may comprise one or more sets of service brakes **150.**

Whilst three tractor axles and three trailer axles are shown, it will be appreciated that any suitable number of axles may be provide on the respective units **110.** It will also be appreciated that any number of the tractor axles and/or trailer axles may be driven axles, including zero (i.e. one of the units may include at least one driven axle while the other does not).

In order to monitor and control motion of the vehicle combination **100,** a number of sensors (not shown) may be distributed across the vehicle combination. For example, one or more wheel speed sensors may be disposed on one or more of the wheels **140** in order to determine the rotation speed of a wheel. One or more inertial measurement units may be present on one or more of the units **110,** for example to determine one or more of a specific force, angular rate, and orientation of the unit **110.** One or more articulation angle sensors may be disposed on one or more of the units **110** in order to determine the articulation angle between consecutive units **110.** It will be appreciated that other vehicle sensors known in the art may also be present on the vehicle combination **100.**

In some examples, one or more image sensors **160** may be disposed on the vehicle combination **100** in order to capture images of the vehicle combination **100** and its environment. In some examples, the image sensors may be cameras, such as video cameras. For example, the vehicle combination may comprise one or more forward-facing cameras **160a** and one or more rearward-facing cameras **160b.** In this example, the vehicle combination **100** comprises a forward-facing camera **160a** mounted on the front of the tractor unit **110-1** and a rearward-facing camera **160b** mounted on the top of the tractor unit **110-1.** The vehicle combination **100** also comprises one more rearward-facing cameras **160b** embodied as side-view cameras mounted on the side of the tractor unit **110-1.** Such cameras are known in the art and may be coupled to an associated display intended to replace traditional wing mirrors. In **FIG. 1** the cameras **160a, 160b** are shown mounted on the tractor unit **110-1,** but it will be appreciated that cameras could be mounted on any unit of the vehicle combination **100.** Whilst forward-facing and rearward-facing cameras are shown, it will be appreciated that cameras facing in any direction capable of capturing a travelling surface for the vehicle may be used.

Information from the cameras may be used to monitor and control motion of the vehicle combination **100.** For example, optical flow is a method of determining the motion of objects or surfaces within a visual scene by comparing successive frames. Optical flow can therefore be used to determine motion parameters of a vehicle based on images taken by image sensors **160** as the vehicle moves through an environment. For example, this can be used as an input to computer vision algorithms, which are in turn used to determine motion parameters such as longitudinal speed, lateral speed, yaw, etc.

**FIG. 2** schematically shows a top-view of an example vehicle combination **100** of the type considered in this disclosure. Similarly to the example of **FIG. 1****,** the vehicle combination **100** comprises a number of units **110,** including a tractor unit **110-1** and a plurality of trailing units **110-2,** ..., **110-n.** In this example, the vehicle combination **100** comprises two rearward-facing cameras **160b,** embodied as side-view cameras, mounted on the tractor unit **110-1.**

**FIG. 2** also shows the requested global forces of the vehicle combination **100** as a whole. Examples of requested global forces of the vehicle combination **100** as a whole may e.g. include a total longitudinal/axial force *Fₓₜₒₜ* a total lateral/radial force *F_{ytot}*, and/or one or more yaw moments *M_{zi}* for the respective vehicle units **110.** In order to control motion of a vehicle combination, the requested global forces of the vehicle combination **100** must be determined and resolved. This may be achieved by a control system (not shown) of the vehicle combination **100** that determines control signals based on a desired reference input and certain operating conditions of the vehicle combination **100.**

For example, the control system may receive an input related to a manoeuvre for the vehicle combination. The manoeuvre may be, for example, straight-line driving, cornering, braking and the like. The signal may be received, for example, from a steering wheel and/or gas/brake pedal of the tractor unit, or any other system that may provide some indication of how the overall forces of the vehicle combination are to be influenced (e.g. steered, propelled or braked). For example, the signal may originate from a lane assist system, a lane following system, an emergency steering system, an emergency braking system, an automated or semi-automated drive system.

The control system may also receive state information from the different units **110** of the vehicle combination **100.** The state information may include motion parameters of the vehicle. The state information may include information from sensors of the vehicle combination **100** such as wheel speed sensors, inertial measurement units, articulation angle sensors, image sensors and the like.

The control system may also receive a motion capability for the vehicle combination **100.** The motion capability of the vehicle combination **100** may describe the limits of motion parameters for safe operation of the vehicle combination **100.**

Based on these inputs, the control system may determine control signals that meet the requested global forces of the vehicle combination **100** subject to certain constraints, such as power management (optimising battery usage) and safety constraints (ensuring that the trajectory for the whole combination **100** is obstacle free and collision free). These control signals may be transmitted to a control allocation system that determines how various actuators (for example, the electrical machines, service brakes **150,** and/or steering servo arrangements) of the vehicle combination **100** are to be controlled in order to generate requested global forces of the vehicle combination **100** as a whole.

In the example of **FIG. 2****,** the vehicle combination **100** includes a combination control allocator **210** and a plurality of unit control allocators **212.** The combination control allocator **210** and the various unit specific control allocators **212** together form a distributed control allocation system for the vehicle combination **100.** In this system, the control allocation may be performed on multiple levels, i.e. first on a level of the vehicle combination **100** as a whole, and then on a level of each vehicle unit **110** individually. The combination control allocator **210** may be provided (as shown) as part of the tractor unit **110-1,** while the unit control allocators **212** are provided as part of each individual unit **110.** It will be appreciated that the combination control allocator **210** may be provided as part of any unit **110** of the vehicle combination **100.**

In order to provide control signals that result in safe and efficient operation of the vehicle combination **100,** it should be ensured that the information on which the control signals are based is accurate. As discussed above, state information may be received, including information from sensors of the vehicle combination **100** such as wheel speed sensors, inertial measurement units, articulation angle sensors, image sensors and the like. However, in some instances, these sensors may not accurately reflect the real conditions of the vehicle combination.

One example of this is a wheel speed measurement from a wheel speed sensor. When operating on low-traction surfaces for example sand, gravel and ice, the wheels of a vehicle can spin much more quickly or slowly than would be expected for the given vehicle speed. This is known as slip, and high-slip scenarios can lead to measurements from a wheel speed sensor that do not accurately reflect the speed of the wheel on the road. This can occur it both acceleration and braking scenarios, and can result in inaccurate results from a vehicle's motion management system, particularly its estimates for vehicle speed.

In order to contextualise a wheel speed measurement, and determine its reliability for use in vehicle motion management calculations, it would be useful to know what type of surface the vehicle is travelling on, and how that might affect the correspondence between the wheel speed measurement and the real speed of the vehicle over the ground. To this end, methods are proposed to determine a confidence value for a wheel speed measurement of a vehicle based on detecting a travelling surface for the vehicle.

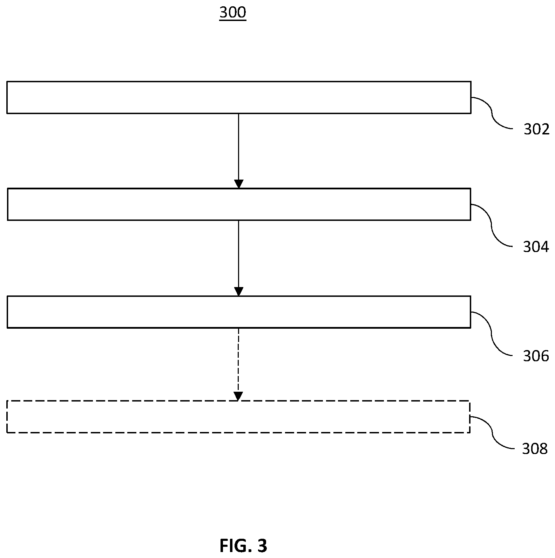

**FIG. 3** is a flowchart of an example method **300** for determining a confidence value for a wheel speed measurement of a vehicle, for example a vehicle combination **100.** The method is a computer-implemented method, performed for example by a control system of a vehicle.

At step **302,** video data is received from at least one image sensor mounted on the vehicle. The image sensor may be an image sensor **160** as described in relation to **FIGS. 1** and **2****.** For example, the image sensor may comprise one or more forward-facing cameras **160a** and/or one or more rearward-facing cameras **160b.** A rearward-facing camera **160b** may be a side-view camera, for example in the position of a wing mirror of the vehicle.

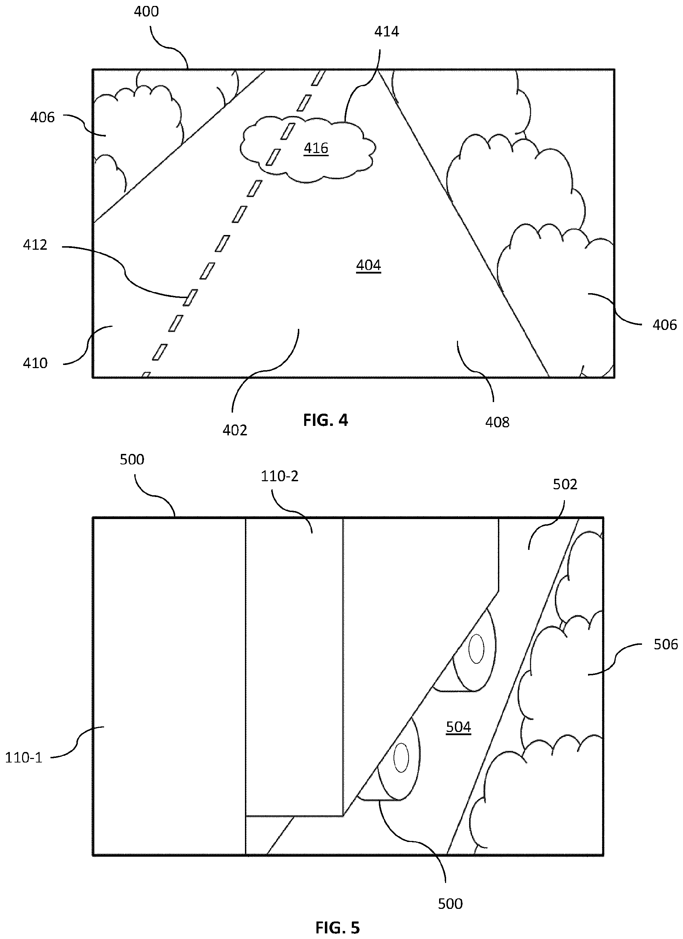

**FIG. 4** shows an example frame **400** from a video captured by a forward-facing camera **160a** of a vehicle. In this example, the forward-facing camera **160a** is mounted on the front of the vehicle, for example on a tractor unit **110-1** of a vehicle combination **100.** The frame **400** shows a road **402** on which the vehicle is travelling. The road **402** comprises a travelling surface **404.** The travelling surface **404** could be any surface on which the vehicle can travel, for example asphalt, sand, gravel, mud, ice, snow, and the like. In the example of **FIG. 4****,** the road **402** has boundaries, shown in the example of **FIG. 4** by bushes **406.** The road **402** may comprise a first lane **408** in which the vehicle is travelling, and a second lane **410,** demarcated by road markings **412.** It will be appreciated that the vehicle may not necessarily travel on a road, for example if the vehicle is travelling in a field, on a beach, on an ice lake, etc. It will also be appreciated that the road may not have boundaries **406** or road markings **412.**

The travelling surface may change as the vehicle moves along its journey. For example, also shown in **FIG. 4** is a patch **414.** The patch **414** may comprise a travelling surface **416** different from the travelling surface **404** of the road **402.** For example, the patch **414** may be an ice patch, water puddle, oil spill, or the like. In particular, the patch **414** may comprise a travelling surface **416** having a different coefficient of friction to the travelling surface **404** of the road **402,** meaning that a wheel **140** of the vehicle may behave differently when it travels over the patch **414.** For example, in the case that the travelling surface **416** has a lower coefficient of friction to the travelling surface **404,** wheel slip may occur on the travelling surface **416** that does not occur on the travelling surface **404.** Whilst a patch **414** is shown in **FIG. 4****,** it will be appreciated that any visible change in surface may be detected by an image sensor, for example a complete change in road surface.

**FIG. 5** shows an example frame **500** from a video captured by a rearward-facing camera **160b,** in particular a side-view camera. In this example, the rearward-facing camera **160b** is mounted on a tractor unit **110-1** of a two-unit vehicle combination **100.** As such, at least part of the tractor unit **110-1** and a trailing unit **110-2** are visible in the frame **500.**

The frame **500** shows a road **502** on which the vehicle is travelling. The road **502** comprises a travelling surface **504.** Similar to the example of **FIG. 4****,** the travelling surface **504** could be any surface on which the vehicle can travel, for example asphalt, sand, gravel, mud, ice, snow, and the like, and the road **502** has boundaries shown by bushes **506.**

Returning to **FIG. 3****,** at step **304,** the video data is processed to determine at least one travelling surface for the vehicle. The determination of a travelling surface may be achieved by using a suitable image processing algorithm. The image processing algorithm should be capable of determining one or more travelling surfaces for the vehicle. To achieve this, different parts of the image may be identified and labelled. For example, in the example of **FIG. 4****,** the image processing algorithm may identify the road **402** and the bushes **406,** and label the travelling surface **404** of the road **402** as asphalt. The image processing algorithm may also identify the patch **414** and label the travelling surface **416** of the patch **414** as ice or the like.

Suitable image processing algorithms include image classification and semantic segmentation. Image classification algorithms known in the art may be used. In some examples, an image classification algorithm may divide an image into patches and then classify the patches in pre-defined categories. Semantic segmentation algorithms label each pixel of an image with a corresponding class. Both image classification and semantic segmentation may employ a machine learning approach, such as the use of deep neural networks, support vector machines (SVM), k-nearest neighbors (k-NN), or logistic regression.

In some examples, a semantic segmentation algorithm may assign classes to the entire scene, and use the context of the scene to determine the classes. This is an improvement over using other methods, such as an SVM or neural network, on just a portion of the image and trying to determine the class of those particular pixels without the surrounding pixels for context. For example, a semantic segmentation algorithm will be able to take into account that one pixel of sky is unlikely to be surrounded by 8 pixels of asphalt, or may be able to determine that a surface is more likely to be muddy when it is raining. Considering the context can be useful to find correlations in the input images. Semantic segmentation also provides localization information in addition to classifying the intended categories, so that information about the location of the detected class can also be determined.

In some examples, identification of the travelling surface may enable a coefficient of friction for the surface to be used. For example, it is known that an asphalt surface may have a friction coefficient around *1*, whereas an ice or snow surface may have a friction coefficient around *0.3*.

If the video data is from a forward-facing camera **160a,** the travelling surface may be a surface in front of the vehicle, put otherwise, a surface on which the vehicle may travel when in forward motion. For example, the travelling surfaces **404, 416** shown in **FIG. 4** may be determined.

If the video data is from a rearward-facing camera **160b,** the travelling surface may be a surface behind the vehicle, put otherwise, a surface on which the vehicle has travelled when in forward motion or a surface on which the vehicle may travel when in reverse motion. The travelling surface may also be a surface underneath the vehicle in the case that the wheels of the vehicle are visible, as in the example of **FIG. 5****.** For example, the travelling surface **504** shown in **FIG. 5** may be determined.

As part of the surface determination, it may also be determined to which wheels of the vehicle the surface applies. For example, in the example of **FIG 4****,** all wheels of the vehicle may travel on surface **404.** However, due to the position of the patch **414** on the road **402,** only the left wheels of the vehicle may travel on surface **416.** Therefore, it may be determined that the travelling surface **416** applies only to the left wheels. A similar approach may be taken when determining surfaces under or behind the vehicle.

It may also be determined when each wheel passes over a particular travelling surface. For example, in the example of **FIG 4****,** based on the longitudinal speed of the vehicle, dimensions of the vehicle, and properties of the camera **160a,** it can be determined when each the left wheels of the vehicle will pass over the travelling surface **416.** A similar approach may be taken when determining surfaces under or behind the vehicle, i.e. it may be determined when each wheel has passed over a particular travelling surface.

Returning to **FIG. 3****,** at step **306,** a confidence value for a wheel speed measurement of the vehicle is determined based on the travelling surface. The confidence value may describe the reliability of a wheel speed measurement for use in the determination of a motion parameter of the vehicle, for example the longitudinal speed of the vehicle. In particular, the confidence value is a measure of how well the wheel speed measurement is likely to correspond to the real speed of the vehicle over the ground, and can be used to determine how much weight should be given to a wheel speed sensor measurement in vehicle motion management calculations.

Any available combination of confidence values may be determined. For example, a confidence value may be determined for a single wheel. Alternatively or additionally, a single confidence value may be determined for a subset of wheels, for example wheels on a common axle. Alternatively or additionally, a single confidence value may be determined for or all wheels of the vehicle. Alternatively or additionally, a respective confidence value may be determined for each individual wheel and/or each individual subset of wheels. Other combinations may be readily envisaged by the skilled person. In this way, only wheels that are affected by a low-traction surface can be taken into account.

A confidence value for a given travelling surface may be determined in any suitable manner. For example, the confidence value may be a function of the coefficient of friction of the surface, the condition of the tyres, and the like. Confidence values may be determined based on a model of a vehicle combination or experimental data relating to a vehicle combination.

The confidence values may be stored, for example, in a lookup table, enabling a confidence value for a particular travelling surface to be retrieved on demand. The confidence value may be expressed in any suitable manner, for example as a percentage, as a value between 0 and 1, as a category (e.g., low-, medium, or high-confidence), or the like.

When the travelling surface for the vehicle has a sufficiently high coefficient of friction (e.g. an asphalt surface), it can be assumed that there is little to no slip at the wheels and that the rotation of the wheels therefore corresponds to the speed of the wheels on the road. In such a case, a relatively high confidence value may be determined indicating that the measurement from the wheel speed sensor is reliable and can be used in vehicle motion management calculations.

When the travelling surface for the vehicle does not have a sufficiently high coefficient of friction (e.g. ice, mud, sand, gravel, or the like), slip may be present at the wheels, meaning that the rotation of the wheels may not correspond to the speed of the wheels on the road. In such a case, a relatively low confidence value may be determined indicating that the measurement from the wheel speed sensor is not reliable and should be used with caution in vehicle motion management calculations, should be corrected, or should not be used at all.

This provides valuable context to wheel speed measurements coming from a wheel speed sensor, and can be used to determine how much weight should be given to a wheel speed sensor measurement in vehicle motion management calculations. The method further removes the requirement for an expensive ground-scanning system and provides an alternative to noisy vehicle-speed estimates from existing camera systems.

As discussed above in relation to **FIG. 4****,** a video may depict more than one travelling surface. In these instances, a confidence value may be determined for each surface. In the example of **FIG. 4****,** a first confidence value may be determined in relation to travelling surface **404,** and a second confidence value may be determined in relation to travelling surface **416.** In this way, if a low-traction surface is detected ahead of the vehicle, the control system can react in real time to ensure control signals are changed appropriate for the change in surface.

At optional step **308,** a motion parameter of the vehicle may be determined based on the wheel speed measurement and the confidence value. The wheel speed measurement and the confidence value may be input into a vehicle state estimator, for example an extended Kalman filter, of the vehicle control system.

Kalman filtering has known applications in guidance, navigation, and control of vehicles. In a Kalman filter, measurements are represented as a mean value and a covariance (or standard deviation). In one example, the confidence value may be part of a covariance matrix of the Kalman filter. For example, if the confidence value for a wheel speed measurement is relatively high, then the covariance value corresponding to that measurement should be relatively small, indicating that the value it calculates is likely to be close to the real speed of the vehicle over the ground. If the confidence value is relatively low, then the covariance value should be relatively large.

In some examples, a Kalman filter may be determined for each surface type, each having a respective covariance. For example, if it is known that ice is likely to be the slipperiest surface, an associated Kalman filter may have the highest covariance, with different filters having lower covariance as the associated surfaces increase in grip.

Motion parameters that may be determined based on a wheel speed measurement include the longitudinal speed of the vehicle, the longitudinal acceleration of the vehicle, the yaw rate of the vehicle, the lateral speed of the vehicle and the lateral acceleration of the vehicle.

If the confidence value is sufficiently high, the initial wheel speed measurement may be used to determine a motion parameter of the vehicle. If the confidence value is not sufficiently high, the wheel speed measurement may be discounted from vehicle motion management calculations entirely, or should be used with caution.

In some examples, the confidence value may be used to give a weight to the wheel speed measurement in the vehicle motion management calculations. For example, a higher confidence value may result in the wheel speed measurement being given a relatively high weight, indicating that it is a reliable measurement for vehicle speed calculations. On the other hand, a lower confidence value may result in the wheel speed measurement being given a relatively low weight, indicating that it is less reliable for vehicle speed calculations.

The disclosed method provides valuable context to wheel speed measurements coming from a wheel speed sensor, and can be used to determine how much weight should be given to a wheel speed sensor measurement in vehicle motion management calculations. This means that vehicle motion management calculations can be adjusted to ensure safe and efficient operation of the vehicle. For example, if the vehicle is travelling on a low-traction surface, the control system can be made aware of this and adjust propulsion or braking control signals accordingly. The surface can be detected using image sensors mounted on a vehicle. If a low-traction surface is detected ahead of the vehicle, the control system can react in real time to ensure control signals are changed appropriate for the surface. This can be done on an individual wheel basis, so that only wheels that are affected by a low-traction surface are taken into account. The disclosed method further removes the requirement for an expensive ground-scanning system and provides an alternative to noisy vehicle-speed estimates from existing camera systems.

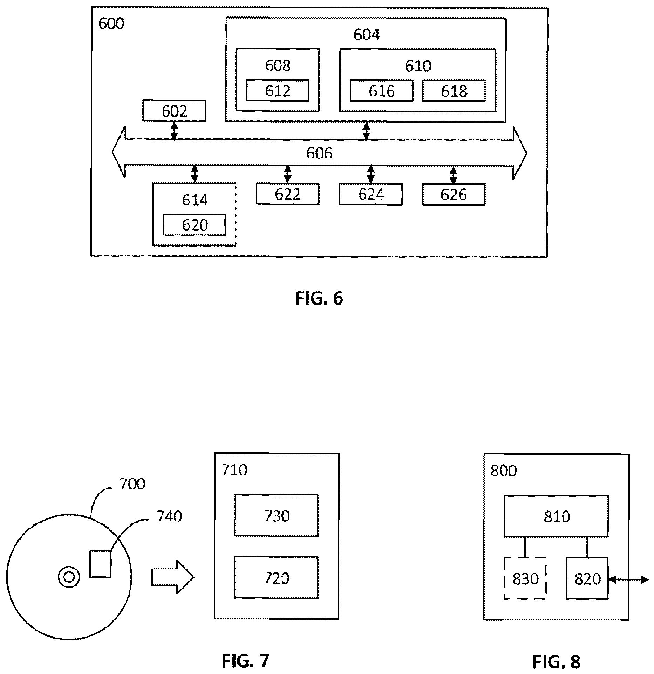

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., of one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** (e.g., of a control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In certain examples, the storage device **614** may be a computer program product storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system 600 that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired. The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates an example computer readable medium in the form of a compact disc (CD) ROM 700. The computer readable medium has stored thereon a computer program **740** comprising program instructions. The computer program is loadable into a data processor (e.g., a data processing unit) **720,** which may, for example, be comprised in a vehicle control unit **710.** When loaded into the data processor, the computer program may be stored in a memory **730** associated with, or comprised in, the data processor. According to some examples, the computer program may, when loaded into, and run by, the data processor, cause execution of method steps according to, for example, any of the methods described herein.

**FIG. 8** schematically illustrates, in terms of a number of functional units, the components of a control unit **800** according to some examples. The control unit may be comprised in a vehicle, e.g., in the form of a vehicle motion management (VMM) unit. A processor device in the form of processing circuitry **810** is provided using any combination of one or more of a suitable central processing unit (CPU), multiprocessor, microcontroller, digital signal processor (DSP), or similar; capable of executing software instructions stored in a computer program product, e.g. in the form of a storage medium **830.** The processing circuitry **810** may further be provided as at least one application specific integrated circuit ASIC, or field programmable gate array FPGA.

Particularly, the processing circuitry **810** is configured to cause the control unit **800** to perform a set of operations, or steps; for example, the method discussed in connection to **FIG. 3****.**

For example, the storage medium **830** may store a set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute methods as herein disclosed.

The storage medium **830** may comprise persistent storage, which, for example, can be any single one or combination of magnetic memory, optical memory, solid state memory or even remotely mounted memory.

The control unit **800** may further comprise an interface **820** for communication with at least one external device. As such, the interface **820** may comprise one or more transmitters and receivers, comprising analogue and digital components and a suitable number of ports for wireline or wireless communication.

The processing circuitry **810** controls the general operation of the control unit **800,** e.g., by sending data and control signals to the interface **820** and the storage medium **830,** by receiving data and reports from the interface **820,** and by retrieving data and instructions from the storage medium **830.** Other components, as well as the related functionality, of the control node are omitted in order not to obscure the concepts presented herein.

In some examples, the control unit **800** may be seen as a control system, or may be comprised in a control system. The control system may be configured for vehicle motion management (VMM). In some examples, the control system is configured to individually control vehicle units and/or vehicle axles and/or wheels of a multi-unit combination vehicle via a dynamic model of the vehicle, which is based on a detected order among vehicle units and/or a detected order among wheel axles.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the invention being set forth in the following claims.

## Claims

1. A computer-implemented method (300) for determining a confidence value for a wheel speed measurement of a vehicle (100), the method comprising:
receiving (302) video data from at least one image sensor (160) mounted on the vehicle (100);
processing (304) the video data to determine at least one travelling surface (404, 416, 504) for the vehicle (100); and
determining (306) a confidence value for a wheel speed measurement of the vehicle (100) based on the travelling surface (404, 416, 504).

2. The computer-implemented method (300) of claim 1, wherein the at least one image sensor (160) comprises at least one forward-facing camera (160a) and/or at least one rearward-facing camera (160b).

3. The computer-implemented method (300) of claim 1 or 2, wherein processing (304) the video data is performed using a semantic segmentation algorithm.

4. The computer-implemented method (300) of any preceding claim, wherein the confidence value describes the correspondence between the wheel speed measurement and the real speed of the vehicle (100) over the ground.

5. The computer-implemented method (300) of any preceding claim, wherein determining (306) the confidence value comprises determining a friction coefficient associated with the travelling surface (404, 416, 504).

6. The computer-implemented method (300) of any preceding claim, wherein processing (304) the video data comprises determining a first travelling surface (404, 416, 504) having a first friction coefficient and determining a second travelling surface (404, 416, 504) having a second friction coefficient.

7. The computer-implemented method (300) of claim 6, wherein determining (306) the confidence value comprises determining a first confidence value based on the first travelling surface (404, 416, 504) and determining a second confidence value based on the second travelling surface (404, 416, 504).

8. The computer-implemented method (300) of any preceding claim, comprising determining (306) a respective confidence value for at least one wheel of the vehicle (100) or at least one subset of wheels of the vehicle (100).

9. The computer-implemented method (300) of any preceding claim, comprising determining (306) a common confidence value for all wheels of the vehicle (100).

10. The computer-implemented method (300) of any preceding claim, further comprising determining (308) a motion parameter of the vehicle (100) based on the wheel speed measurement and the confidence value.

11. The computer-implemented method (300) of any preceding claim, wherein the vehicle (100) is a vehicle combination comprising a tractor unit (110-1) and at least one trailing unit (110-2, ..., 110-n), and the at least one image sensor (160) is mounted on the tractor unit of the vehicle combination.

12. A computer program product comprising program code for performing, when executed by processing circuitry, the computer-implemented method (300) of any of claims 1 to 11.

13. A non-transitory computer-readable storage medium comprising instructions, which when executed by processing circuitry, cause the processing circuitry to perform the computer-implemented method (300) of any of claims 1 to 11.

14. A computer system comprising one or more control units comprising processing circuitry configured to perform the computer-implemented method (300) of any of claims 1 to 11.

15. A vehicle comprising the computer system of claim 14.

## Patentansprüche

1. Computerimplementiertes Verfahren (300) zum Bestimmen eines Konfidenzwerts für eine Radgeschwindigkeitsmessung eines Fahrzeugs (100), wobei das Verfahren umfasst:
Empfangen (302) von Videodaten von mindestens einem Bildsensor (160), der an dem Fahrzeug (100) angebracht ist;
Verarbeiten (304) der Videodaten, um mindestens eine Fahrbahnoberfläche (404, 416, 504) für das Fahrzeug (100) zu bestimmen; und
Bestimmen (306) eines Konfidenzwerts für eine Radgeschwindigkeitsmessung des Fahrzeugs (100) basierend auf der Fahrbahnoberfläche (404, 416, 504).

2. Computerimplementiertes Verfahren (300) nach Anspruch 1, wobei der mindestens eine Bildsensor (160) mindestens eine nach vorne gerichtete Kamera (160a) und/oder mindestens eine nach hinten gerichtete Kamera(160b) umfasst.

3. Computerimplementiertes Verfahren (300) nach Anspruch 1 oder 2, wobei das Verarbeiten (304) der Videodaten unter Verwendung eines Algorithmus zur semantischen Segmentierung durchgeführt wird.

4. Computerimplementiertes Verfahren (300) nach einem der vorhergehenden Ansprüche, wobei der Konfidenzwert die Übereinstimmung zwischen der Radgeschwindigkeitsmessung und der tatsächlichen Geschwindigkeit des Fahrzeugs (100) über Grund beschreibt.

5. Computerimplementiertes Verfahren (300) nach einem der vorhergehenden Ansprüche, wobei das Bestimmen (306) des Konfidenzwerts das Bestimmen eines der Fahrbahnoberfläche (404, 416, 504) zugeordneten Reibungskoeffizienten umfasst.

6. Computerimplementiertes Verfahren (300) nach einem der vorhergehenden Ansprüche, wobei das Verarbeiten (304) der Videodaten das Bestimmen einer ersten Fahrbahnoberfläche (404, 416, 504) mit einem ersten Reibungskoeffizienten und das Bestimmen einer zweiten Fahrbahnoberfläche (404, 416, 504) mit einem zweiten Reibungskoeffizienten umfasst.

7. Computerimplementiertes Verfahren (300) nach Anspruch 6, wobei das Bestimmen (306) des Konfidenzwerts das Bestimmen eines ersten Konfidenzwerts basierend auf der ersten Fahrbahnoberfläche (404, 416, 504) und das Bestimmen eines zweiten Konfidenzwerts basierend auf der zweiten Fahrbahnoberfläche (404, 416, 504) umfasst.

8. Computerimplementiertes Verfahren (300) nach einem der vorhergehenden Ansprüche, umfassend das Bestimmen (306) eines jeweiligen Konfidenzwerts für mindestens ein Rad des Fahrzeugs (100) oder mindestens eine Teilmenge von Rädern des Fahrzeugs (100).

9. Computerimplementiertes Verfahren (300) nach einem der vorhergehenden Ansprüche, umfassend das Bestimmen (306) eines gemeinsamen Konfidenzwerts für alle Räder des Fahrzeugs (100).

10. Computerimplementiertes Verfahren (300) nach einem der vorhergehenden Ansprüche, ferner umfassend das Bestimmen (308) eines Bewegungsparameters des Fahrzeugs (100) basierend auf der Radgeschwindigkeitsmessung und dem Konfidenzwert.

11. Computerimplementiertes Verfahren (300) nach einem der vorhergehenden Ansprüche, wobei das Fahrzeug (100) eine Fahrzeugkombination ist, die eine Zugmaschine (110-1) und mindestens eine Nachlaufeinheit (110-2, ..., 110-n) umfasst, und der mindestens eine Bildsensor (160) an der Zugmaschine der Fahrzeugkombination angebracht ist.

12. Computerprogrammprodukt, umfassend Programmcode zum Durchführen, wenn er durch eine Verarbeitungsschaltung ausgeführt wird, des computerimplementierten Verfahrens (300) nach einem der Ansprüche 1 bis 11.

13. Nichtflüchtiges computerlesbares Speichermedium, umfassend Anweisungen, die, wenn sie durch eine Verarbeitungsschaltung ausgeführt werden, die Verarbeitungsschaltung veranlassen, das computerimplementierte Verfahren (300) nach einem der Ansprüche 1 bis 11 durchzuführen.

14. Computersystem, umfassend eine oder mehrere Steuereinheiten, die eine Verarbeitungsschaltung umfassen, die dafür konfiguriert ist, das computerimplementierte Verfahren (300) nach einem der Ansprüche 1 bis 11 durchzuführen.

15. Fahrzeug, umfassend das Computersystem nach Anspruch 14.

## Revendications

1. Procédé mis en œuvre par ordinateur (300) pour déterminer une valeur de confiance pour une mesure de vitesse de roue d'un véhicule (100), le procédé comprenant :
la réception (302) de données vidéo provenant d'au moins un capteur d'image (160) monté sur le véhicule (100) ;
le traitement (304) des données vidéo pour déterminer au moins une surface de roulement (404, 416, 504) pour le véhicule (100) ; et
la détermination (306) d'une valeur de confiance pour une mesure de vitesse de roue du véhicule (100) sur la base de la surface de roulement (404, 416, 504).

2. Procédé mis en œuvre par ordinateur (300) selon la revendication 1, dans lequel l'au moins un capteur d'image (160) comprend au moins une caméra orientée vers l'avant (160a) et/ou au moins une caméra orientée vers l'arrière (160b).

3. Procédé mis en œuvre par ordinateur (300) selon la revendication 1 ou 2, dans lequel le traitement (304) des données vidéo est effectué au moyen d'un algorithme de segmentation sémantique.

4. Procédé mis en œuvre par ordinateur (300) selon l'une quelconque des revendications précédentes, dans lequel la valeur de confiance décrit la correspondance entre la mesure de vitesse de roue et la vitesse réelle du véhicule (100) par rapport au sol.

5. Procédé mis en œuvre par ordinateur (300) selon l'une quelconque des revendications précédentes, dans lequel la détermination (306) de la valeur de confiance comprend la détermination d'un coefficient de frottement associé à la surface de roulement (404, 416, 504).

6. Procédé mis en œuvre par ordinateur (300) selon l'une quelconque des revendications précédentes, dans lequel le traitement (304) des données vidéo comprend la détermination d'une première surface de roulement (404, 416, 504) ayant un premier coefficient de frottement et la détermination d'une seconde surface de roulement (404, 416, 504) ayant un second coefficient de frottement.

7. Procédé mis en œuvre par ordinateur (300) selon la revendication 6, dans lequel la détermination (306) de la valeur de confiance comprend la détermination d'une première valeur de confiance sur la base de la première surface de roulement (404, 416, 504) et la détermination d'une seconde valeur de confiance sur la base de la seconde surface de roulement (404, 416, 504).

8. Procédé mis en œuvre par ordinateur (300) selon l'une quelconque des revendications précédentes, comprenant la détermination (306) d'une valeur de confiance respective pour au moins une roue du véhicule (100) ou au moins un sous-ensemble de roues du véhicule (100).

9. Procédé mis en œuvre par ordinateur (300) selon l'une quelconque des revendications précédentes, comprenant la détermination (306) d'une valeur de confiance commune pour toutes les roues du véhicule (100).

10. Procédé mis en œuvre par ordinateur (300) selon l'une quelconque des revendications précédentes, comprenant en outre la détermination (308) d'un paramètre de mouvement du véhicule (100) sur la base de la mesure de vitesse de roue et de la valeur de confiance.

11. Procédé mis en œuvre par ordinateur (300) selon l'une quelconque des revendications précédentes, dans lequel le véhicule (100) est un ensemble de véhicules comprenant un véhicule tracteur (110-1) et au moins une unité remorquée (110-2, ..., 110-n), et l'au moins un capteur d'image (160) est monté sur le véhicule tracteur de l'ensemble de véhicules.

12. Produit-programme d'ordinateur comprenant un code de programme destiné à exécuter, lorsqu'il est exécuté par une circuiterie de traitement, le procédé mis en œuvre par ordinateur (300) selon l'une quelconque des revendications 1 à 11.

13. Support de stockage lisible par ordinateur non transitoire comprenant des instructions qui, lorsqu'elles sont exécutées par une circuiterie de traitement, amènent la circuiterie de traitement à exécuter le procédé mis en œuvre par ordinateur (300) selon l'une quelconque des revendications 1 à 11.

14. Système informatique comprenant une ou plusieurs unités de commande comprenant une circuiterie de traitement configurée pour exécuter le procédé mis en œuvre par ordinateur (300) selon l'une quelconque des revendications 1 à 11.

15. Véhicule comprenant le système informatique selon la revendication 14.
